(19) Europäisches Patentamt
European Patent Office
Office européen des brevets

(11) EP 2 100 002 B1

(12) **EUROPEAN PATENT SPECIFICATION**

(45) Date of publication and mention of the grant of the patent:
**25.04.2012 Bulletin 2012/17**

(21) Application number: **07862397.2**

(22) Date of filing: **30.11.2007**

(51) Int Cl.:
***E21B 43/00*** *(2006.01)* ***C09K 8/528*** *(2006.01)*

(86) International application number:
**PCT/US2007/024687**

(87) International publication number:
**WO 2008/066918 (05.06.2008 Gazette 2008/23)**

(54) **SCALE SQUEEZE TREATMENT METHODS AND SYSTEMS**

QUETSCHBEHANDLUNGSVERFAHREN UND SYSTEME FÜR KALKABLAGERUNGEN

PROCÉDÉS ET SYSTÈMES DE TRAITEMENT PAR COMPRESSION DU TARTRE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **30.11.2006 US 861801 P**

(43) Date of publication of application:
**16.09.2009 Bulletin 2009/38**

(73) Proprietor: **Rhodia, Inc.**
**Cranbury, NJ 08512 (US)**

(72) Inventors:
- **DE CAMPO, Floryan**
**Shanghai, Minhang District**
**201100 (HK)**
- **COLACO, Allwyn**
**Princeton,**
**New Jersey 08540, (US)**
- **KESAVAN, Subramanian**
**East Windsor, NJ 08520 (US)**

(74) Representative: **Gillard, Richard Edward**
**Elkington and Fife LLP**
**Thavies Inn House**
**3-4 Holborn Circus**
**London EC1N 2HA (GB)**

(56) References cited:
**WO-A1-01/81476**
**US-A- 4 670 166**
**US-A- 4 738 897**
**US-A- 5 002 126**
**US-A- 5 224 543**
**US-A- 5 226 481**
**US-A- 5 756 720**
**US-B1- 6 387 853**
**US-B2- 7 021 378**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### BACKGROUND OF THE INVENTION

This invention relates to the treatment of hydrocarbon-containing formations. More particularly, the invention relates to fluids which are used to optimize the production of hydrocarbon from a formation, known as well completion fluids. The invention specifically relates to scale inhibition treatment compositions.

Contact of various inorganic compounds present in hydrocarbon bearing rock formations with compounds present in oilfield process fluids, such as seawater, sometimes leads to the formation and precipitation of "scale", that is, water insoluble salts, such as barium sulfate and calcium carbonate, that can clog formation porosity and inhibit the flow of hydrocarbons from the formation to the wellbore. Scale inhibitors are used in oil fields to control or prevent scale deposition in the production conduit or completion system. Scale-inhibitor chemicals may be continuously injected through a downhole injection point in the completion, or periodic squeeze treatments may be undertaken to place the inhibitor in the reservoir matrix for subsequent commingling with produced fluids. Some scale-inhibitor systems integrate scale inhibitors and fracture treatments into one step, which guarantees that the entire well is treated with scale inhibitor. In this type of treatment, a high-efficiency scale inhibitor is pumped into the matrix surrounding the fracture face during leakoff. It adsorbs to the formation during pumping until the fracture begins to produce water. As water passes through the inhibitor-adsorbed zone, it dissolves sufficient inhibitor to prevent scale deposition. The inhibitor is better placed than in a conventional scale-inhibitor squeeze, which reduces the retreatment cost and improves production.

Scale inhibitor squeeze fluids are typically Newtonian fluids which have difficulties to reach low permeability regions of hydrocarbon formations, especially horizontal hydrocarbon well formations. As a result, squeeze treatment with such fluids is not efficient in these regions and may cause the deposit of scale which can then block these regions, resulting in decreased production rates.

SPE paper 94593 describes using fully viscosified scale squeeze fluids to help optimize the squeeze treatment by allowing the fluid to reach the low permeability region and the horizontal zones. This SPE paper describes use of a xanthan polymer to place scale inhibitor in a horizontal well. However, the paper admits that the xanthan needed a breaker to recover all of it. Leaving such compounds in the well could then be damaging for the formation which will eventually decrease the production efficiency.

US 5,226,481 discloses a method for increasing the stability of water-based fracturing fluids in which a base fracturing fluid is formulated by mixing together a hard mix water containing multivalent cations, a water soluble polymer and a cross-linking agent for the water soluble polymer. A water softener is added to the base fracturing fluid which hinders the ability of the multivalent cations present in the hard mix water to compete with the water soluble polymer for borate based cross-linking agent, thereby stabilizing the result fracturing fluid.

US 4,738,897 and US 4,670,166 disclose a solid polymeric body comprising a polymer matrix containing a water-soluble reagent leachable into a fluid containing condensed water, said matrix being reagent permeative and insoluble in said fluid containing condensed water and the said body preferably having a softening point substantially above that of the temperature of the fluid environment in which it is to be employed is useful for the introduction of an additive reagent into said fluid particularly when said fluid is located in a subterranean formation.

US 5,224,543 discloses a scale inhibitor which is added to a cross-linked fracturing fluid as an integral part of the fracturing fluid. Preferred fracturing fluids are borate cross-linked and the preferred scale inhibitor is polyacrylate.

US 6,387,853 discloses polymers which are derivatized and then introduced into a wellbore, such as in a hydraulic fracturing treatment. A polymer may be a guar powder that is mixed with a organic solvent and derivatized using a derivatizing agent, such as sodium chloroacetate.

WO 01/81476 discloses stable non-aqueous suspensions of water-soluble polymers, and more particularly, suspensions characterized by a medium of low molecular weight polyethylene glycol and a stabilizer of hydrogenated castor wax or oil.

It would be of great commercial value and importance to provide a hydrocarbon formation treatment scale inhibition composition and method of using that composition in a squeeze treatment which uses readily available, economical, easily modified or customized rheology modifiers.

### SUMMARY OF THE INVENTION

In a first aspect, the present invention is directed to a scale squeeze treatment composition for hydrocarbon wells, comprising an aqueous medium, a scale inhibitor, and a guar selected from hydroxypropyl trimethylammonium guar, hydroxypropyl lauryldimethylammonium guar, hydroxypropyl stearyldimethylammonium guar, and mixtures thereof.

## DETAILED DESCRIPTION

Typically, water will be a major amount by weight of the treatment composition. Water is typically present in an amount by weight 50% or more and more typically 80% or more by weight of the treatment composition. The water can be from any source so long as the source contains no contaminants that are chemically or physically incompatible with the other components of the fluid (e.g., by causing undesirable precipitation). The water need not be potable and may be brackish and contain salts of such metals as sodium, potassium, calcium, zinc, magnesium, etc or other materials typical of sources of water found in or near oil fields.

Using fully viscosified scale inhibitors solutions improves the placement of the scale inhibitor during the squeeze treatments. Guars are compatible with typical scale inhibitors and have the advantage of minimizing the damage to the formation and maintaining high conductivity after the treatment and providing excellent fluid flowback. Guars are well known, natural galactomannan polysaccharide polymers which are used to modify viscosity of fluids and generate gels.

Guars can be a non-derivatized galactomannan polysaccharide or a derivatized galactomannan polysaccharide that is substituted at one or more sites of the polysaccharide with a substituent group, independently selected for each site. Substituent groups include cationic substituent groups such as quaternary ammonium groups, nonionic substituent groups, such as hydroxyalkyl groups, and anionic substituent groups, such as carboxyalkl groups.

The guar component of the present invention comprises a derivatized guar selected from hydroxypropyl trimethylammonium guar, hydroxypropyl lauryldimethylammonium guar, hydroxypropyl stearyldimethylammonium guar, and mixtures thereof. The guar is a derivatized polycationic guar that comprises cationic subsituent groups. Suitable guars are commercially available and include, for example a cationic guar, Jaguar™ C-17 guar, available from Rhodia Inc.

In one embodiment, the derivatized guar according to the present invention exhibits a total degree of substitution ("$DS_T$") of from 0.001 to about 3.0, wherein:

$DS_T$ is the sum of the DS for cationic substituent groups ("$DS_{cationic}$") and, the DS for non-ionic substituent groups ("$DS_{nonionic}$"),

$DS_{cationic}$ is from 0 to 3, more typically from 0.001 to 2.0, and even more typically from 0.001 to 1.0,

$DS_{nonionic}$ is from 0 to 3.0, more typically from 0.001 to 2.5, and even more typically from 0.001 to 1.0.

As used herein, the term "degree of substitution" means the number of substituent groups per saccharide unit of guar polysaccharide.

In one embodiment the guar has a molecular weight of greater than 1,000,000 grams per mole, more typically of from 1,500,000 to 2,500,00 grams per mole.

In one embodiment the guar is a reduced molecular weight guar having a molecular weight of less than 1,000,000 grams per mole.

In one embodiment, the scale treatment composition of the present invention comprises an amount of guar sufficient to increase the viscosity of the composition, as measured under low shear conditions to a value of from greater than 0.01 to 0.1 Pa.s (10 to 100 centiPoise ("cp")), more typically from 0.01 to 0.05 Pa.s (10 to 50 cp) and even more typically from 0.01 to 0.02 Pa.s (10 to 20 cp). As used herein, "low shear conditions" means a shear rate of less than or equal to 100 reciprocal seconds ("$s^{-1}$").

The scale treatment composition of the present invention typically exhibits a non-Newtonian, shear-thinning viscosity. In one embodiment, the viscosity of the scale treatment composition, as measured at a shear rate of greater than 100 $s^{-1}$, more typically greater than 150 $s^{-1}$ ("high shear conditions"), is less than the viscosity of the scale treatment composition as measured under low shear conditions.

In one embodiment, the scale treatment composition comprises from 0.1 to 50 percent by weight ("wt%"), more typically from 0.1 to 20 wt%, even more typically from 0.1 to 10 wt%, guar.

The scale inhibitor component of the scale treatment of the present invention can be any known scale inhibitor, including, for example, phosphate ester scale inhibitors, such as triethanolamine phosphate and salts thereof, phosphonic acid based scale inhibitors, such as aminomethylenephosphonic acid, 1-hydroxyethyl-1,1-diphosphonic acid and salts thereof, 2-hydroxyethylamino bismethylenephosphonic acid and salts thereof, phosphonocarboxylic acids, and polymeric polyanionic scale inhibitors: Suitable polymeric polyanionic scale inhibitors include homopolymers and copolymers comprising monomeric units derived from water soluble or partially water soluble ethylenically unsaturated monomers having an anionic substituent group, such as for example, acrylic acid, vinyl sulfonic acid, methacrylic acid, maleic acid, itaconic acid, fumaric acid, vinyl acetate, allyl alcohol, allyl sulfonic acid, vinyl phosphonic acid, vinylidene diphosphonic acid.

In one embodiment, the scale inhibitor comprises one or more compounds selected from diethylene triaminepentakis(methylenephosphonic acid)s or salts thereof, such as sodium diethylenetriaminepentakis(methylene phosphonate,

2, phosphonobutane-1,2,4 - tricarboxylic acid, homopolymers of acylic acid, maleic acid, or vinyl sulfonic acid, co-polymers of vinylphosphonic acid and vinylsulfonic acid, co-polymers of maleic acid and allylsulfonic acid, copolymers of vinyl phosphonic acid and vinyl sulfonic acid, phosphonic acid terminated oligomers, such as

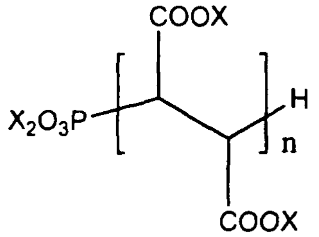

and phosphonic acid terminated polymers, such as for example,

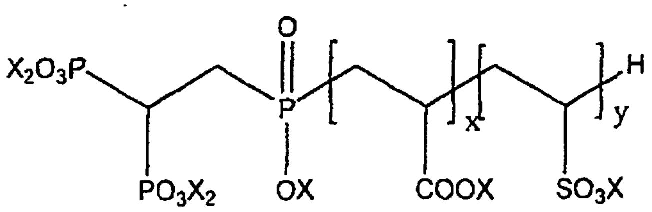

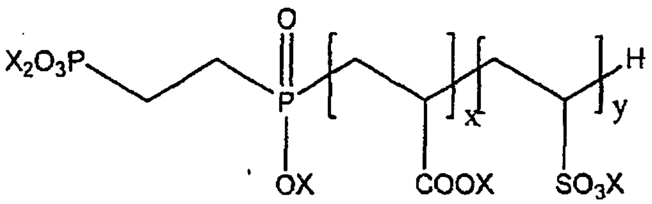

wherein X is H or an anion and x and y are chosen to obtain a ratio and MW which gives optimum performance, typically x + y is greater than or equal to 2 and less than or equal to 500.

The scale treatment composition of the present invention comprises an amount of scale inhibitor effective to inhibit scale formation under the conditions of use. More typically, the scale squeeze treatment composition of the present invention comprises, from 0.01 to 50 wt%, more typically from 1 to 20 wt% of the scale inhibitor.

In one embodiment, the scale treatment composition of the present invention comprises one or more scale inhibitors, one or more guars, and water. The composition may, optionally, further comprise other additives known in the art, such as for example, surfactants, corrosion inhibitors, and breakers, such as enzymes or oxidizers.

In one embodiment, the scale treatment composition of the present invention is used by injecting the composition, either continuously or periodically, into a hydrocarbon-bearing bearing rock formation to inhibit scale deposition in the formation.

Guars can be used with scale inhibitor squeeze solution to increase the viscosity and then improve the placement of such solutions in horizontal wells. The advantages of using guars are their ready availability at low cost, being easily modified, having improved shear-thinning profile, and robust salt tolerance. As a result, such fluid will not require the use of any breaker. In addition, guars currently used in fracturing fluids are known to avoid formation damage by maintaining high conductivity.. Furthermore, it is believed that embodiments comprising a polycationic guar provide an additional benefit in that the polycationic guar acts as a coupling agent to provide improved retention of anionic scale inhibitors on anionic rock formation surfaces, such as silicate formation surfaces. Finally, guars do not undergo decomposition at high shear rate which can be the case of other polymers, such as poly(acrylamide) polymers.

## EXAMPLES

The following examples in which all parts and percentages are by weight unless otherwise indicated illustrate a few embodiments of the invention.

**Example 1 - Viscosity Measurements**

A series of compositions were made by combining water, a guar polymer (Jaguar™ C-17 guar ("G-1"), Jaguar™ HP-120 guar ("G-2"), each a commercial product available from Rhodia Inc., or a hydroxypropyl guar having a molecular substitution of 2.0 ("G-3")) and a scale inhibitor (solutions were 10% actives solution of phosphonate end-capped polymer ("SI-1", Aquarite ESL brand) and 10% actives solution of a phosphonate scale inhibitor, that is, diethylenetriamine tetrakis (methylenephosphonic acid ("SI-2", Briquest 543-45AS brand)). Each of the compositions was made as follows. First, 200 ml scale inhibitor solution was added to a 1 L glass container jar placed on a two speed Warring Laboratory Blender. Next 0.1-1% by weight active of guar polymer was added to the jar. The blender speed was gradually adjusted -5000 rpm over about 20 seconds. Mixing was allowed to occur at this rate for the first 2 minutes. Then the blender speed was set to about 10,000 RPM for an additional 1 minute. The fluid was then poured and stored into a plastic container until the sample is completely de-aired.

Then each of the 200 ml de-aired samples of the exemplary compositions was poured into a 250 ml beaker for analysis on a Ofite Model 900 viscometer. The Ofite viscometer measures the couette flow between coaxial cylinders. Measurements were conducted at ambient temperature with varying shear rates/rpm.

Table 1 summarizes the viscosity results, expressed in Pascal seconds (centipoise (CP)), obtained with various aqueous solutions of 0.3 wt% guar polymer and 10 wt% inhibitors, as measured under different shear conditions, expressed as rpm of the viscometer and shear rate.

Table 1 - Rheology results

| Scale Inhibitor | Inhibitor (wt%) | Guar | Guar (wt%) | Visual Description | Viscosity Pa.s (cP) | | |
|---|---|---|---|---|---|---|---|
| | | | | | @ 5 rpm ($8.5s^{-1}$) | @ 59 rpm ($100s^{-1}$) | @ 100 rpm ($170s^{-1}$) |
| SI-1 | 10 | G-1 | 0.3 | clear gel | 0.0507 (50.7) | 0.0275 (27.5) | 0.0236 (23.6) |
| | | *G2 | 0.3 | clear gel | 0.0245 (24.5) | 0.0101 (10.1) | 0.0013 (1.3) |
| | | *G-3 | 0.3 | clear gel | 0.0174 (17.4) | 0.0123 (12.3) | 0.0138 (13.8) |
| SI-2 | 10 | G-1 | 0.3 | clear gel | 0.0399 (39.9) | 0.0337 (33.7) | 0.0287 (28.7) |
| | | *G-2 | 0.3 | clear gel | 0.0285 (28.5) | 0.0167 (16.7) | 0.0155 (15.5) |
| | | *G-3 | 0.3 | clear gel | 0.0174 (17.4) | 0.0173 (17.3) | 0.0168 (16.8) |
| *Comparative examples | | | | | | | |

The results set forth in Table 1 show that with only 0.3% of the various guar polymers, both scale inhibitor solutions could be viscosified. G-1 guar, which is a polycationic guar, showed particularly good results. The results also showed a shear thinning profile wherein the solution viscosity decreased with increasing shear rate.

Example 2

Ideally, the viscosity modifier should not alter the performance of the scale inhibitors for the intended application. The effect of the guar polymers on the performance of each scale inhibitor was evaluated. Two typical tests for squeeze treatment scale inhibitors were chosen:

- A. Inhibition of barium and strontium sulfate scale (static test)
- B. Adsorption onto sandstone

A. Inhibition of barium and strontium sulfate

Test brines were Sea Water (SW) and a 2,000 ppm $Ca^{2+}$, Formation Water (FW), a moderate scaling formation

water. Brines were made-up separately and their composition is given in the table below.

| **Ion** | **SW** (mg/l) | **FW** (mg/l) |
|---|---|---|
| $Na^+$ | 10,890 | 31,275 |
| $Ca^{2+}$ | 428 | 2,000 |
| $Mg^{2+}$ | 1,368 | 739 |
| $K^+$ | 460 | 654 |
| $Ba^{2+}$ | 0 | 269 |
| $Sr^{2+}$ | 0 | 771 |
| $SO_4^{2-}$ | 2,690 | 0 |

Inhibitor stock solutions of 10,000 ppm (based on SI active ingredient) were made up in DI water. The scale inhibitor solutions were the same for which the viscosity was measured. 50 mL of SW was measured and transferred into a plastic bottle and the appropriate amount of inhibitor stock solution was added. A blank (no inhibitor) and a control (50 mL DI water only) were also prepared. Then, 50mL of FW was transferred into a separate plastic bottle and 1mL of buffer solution was added to adjust the pH to 5.5. All the plastic bottles were placed into the oven at 95°C for at least 1h. Then each SW solution was poured into one FW solution.

Samples were taken after 2 and 22 hours. A 1 ml sample was taken with a 1ml automatic pipette. This was injected into a plastic test tube containing 9mls of a pre-prepared quench solution (28.559g of KCl, 5g of ScaleTreat 810 PVS in distilled water, adjusted to pH = 8.0 - 8.5 with NaOH and made up to 5 litres in a 5 litre volumetric flask). A cap was placed on the test tube and the solution was well mixed. Each sample was analyzed for residual barium/strontium by ICP analysis within 48 hours.

The $BaSO_4$ and $SrSO_4$ scale inhibition efficiency was then calculated according to equation (5.1):

$$\%\ \text{efficiency} = \frac{[M^{2+}\ \text{in sample}] - [M^{2+}]_{min}}{[M^{2+}]_{max} - [M^{2+}]_{min}} \times 100 \qquad (5.1)$$

$M^{2+} = Sr^{2+}$ or $Ba^{2+}$

$[M^{2+}]_{max}$ = $M^{2+}$ content of maximum ($FW/H_2O$) control

$[M^{2+}]_{min}$ = $M^{2+}$ content of minimum (FW/SW) blank.

The results in the table below show that the presence of the various guar polymers did not affect significantly the performance of the scale inhibitor whether it was SI-1 or SI-2.

| **Inhibitor** | **Inhibitor AI (ppm)** | **Barium % Inhibition** | | **Strontium % Inhibition** | |
|---|---|---|---|---|---|
| | | **2h** | **24h** | **2h** | **24h** |
| SI-1 | 30 | 54.46 | 11.90 | 63.11 | 63.71 |
| SI-1 + 0.3 wt% G-1 | 30 | 58.04 | 11.11 | 83.01 | 80.24 |
| *SI-1 + 0.3 wt% G-2 | 30 | 48.21 | 9.52 | 70.39 | 76.21 |
| *SI-1 + 0.3 wt% G-3 | 30 | 54.31 | 15.70 | 72.82 | 54.03 |
| | | | | | |
| SI-2 | 15 | 91.38 | 63.64 | 87.38 | 82.26 |
| SI-2 + 0.3 wt% G-1 | 15 | 96.43 | 60.32 | 96.12 | 89.11 |
| *SI-2 + 0.3 wt% G-2 | 15 | 90.18 | 42.06 | 100.00 | 85.48 |
| *SI-2 + 0.3 wt% G-3 | 15 | 100.00 | 51.24 | 100.00 | 75.00 |
| *Comparative examples | | | | | |

B. Adsorption onto sandstone

10 g of acid-washed crushed Clashach sandstone, with a particle size of 150-500 microns, are mixed with 20 ml of the 500 ppm scale inhibitor stock solution (adjusted at the desired pH) into a plastic bottle, placed in a tightly sealed bottle and heated in an oven at 90°C and for 24 hours.

After this time, the samples are filtered under vacuum through a 0.45 μm membrane filter. Filtration is carried out at the specific temperature of interest in the experiment. The filtered supernatant are analyzed for the scale inhibitor content which using the formula below gives the amount of inhibitor adsorbed in ppm/mg of sand.

$$\text{Adsorption (mg polymer/gram sand)} = \frac{(C_{initial} - C_{final})}{M_{sand}} * \frac{V_{solution}}{1000}$$

$$C_{initial} = 500ppm,\ V_{solution} = 20mL,\ M_{sand} = 10g$$

The results summarized below showed that none of the guar polymers altered significantly the adsorption of any of the two scale inhibitors..

| Inhibitor | Adsorption (ppm inhibitor / mg of sand) |
|---|---|
| SI-1 | 0.14 |
| SI-1+ 0.3 wt% G-1 | 0.13 |
| *SI-1 + 0.3 wt% G-2 | 0.22 |
| *SI-1 + 0.3 wt% G-3 | 0.11 |
| | |
| SI-2 | 0.33 |
| SI-2+ 0.3 wt% G-1 | 0.34 |
| *SI-2 + 0.3 wt% G-2 | 0.34 |
| *SI-2 + 0.3 wt% G-3 | 0.35 |
| *Comparative examples | |

## Claims

1. A scale squeeze treatment composition for treating hydrocarbon wells, comprising an aqueous medium, a scale inhibitor, and a guar selected from hydroxypropyl trimethylammonium guar, hydroxypropyl lauryldimethylammonium guar, hydroxypropyl stearyldimethylammonium guar, and mixtures thereof.

2. The composition of claim 1, wherein the solution is from 0.1 to 50 percent by weight guar.

3. The composition of claim 1, wherein the solution is from 1 to 50 percent by weight scale inhibitor.

4. The composition of claim 1, wherein the scale inhibitor is a sulphonate-functional phosphonated copolymer or a soluble source of diethylene-triaminepentakis (methylenephosphonic acid).

5. The composition of claim 1, wherein the scale inhibitor is a solution of sodium diethylenetriaminepentakis(methylene phosphonate) or phosphonate end-capped copolymer.

6. The composition of claim 1, wherein the scale inhibitor comprises a phosphonic acid terminated oligomer according to formula (I):

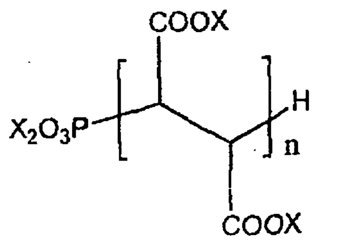

(I).

7. The composition of claim 1, wherein the scale inhibitor comprises a phosphonic acid terminated polymer according to formula (II):

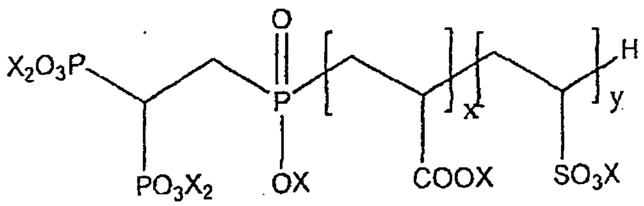

(II),

wherein x is H or an anion and x+y is an integer greater than or equal to 2 and less than or equal to 500.

8. The composition of claim 1, wherein the scale inhibitor comprises a phosphonic acid terminated polymer according to formula (III):

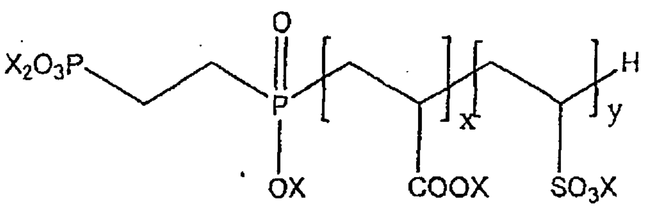

(III),

wherein x is H or an anion and x+y is an integer greater than or equal to 2 and less than or equal to 500.

9. The composition of claim 1, wherein the composition has a viscosity of from greater than 0.01 to 0.1 Pa.s (10 to 100 centiPoise) at a shear rate of less than or equal to 100 reciprocal seconds.

**Patentansprüche**

1. Zusammensetzung für die Quetschbehandlung von Ablagerungen zur Behandlung von Kohlenwasserstoffbohrlöchern, die Folgendes umfasst: ein wässriges Medium, einen Ablagerungsinhibitor und ein Guar, das aus Hydroxypropyltrimethylammonium-Guar, Hydroxypropyllauryldimethylammonium-Guar, Hydroxypropylstearyldimethylammonium-Guar und Mischungen davon ausgewählt ist.

2. Zusammensetzung nach Anspruch 1, worin die Lösung von 0,1 bis 50 Gewichtsprozente Guar enthält.

3. Zusammensetzung nach Anspruch 1, worin die Lösung von 1 bis 50 Gewichtsprozente Ablagerungsinhibitor enthält.

4. Zusamnmensetzung nach Anspruch 1, worin der Ablagerungsinhibitor ein Sulfonat-funktionales Phosphonat-Copolymer oder eine lösliche Quelle von Diethylentriaminpentakis(methylenphosphonsäure) ist.

5. Zusammensetzung nach Anspruch 1, worin der Ablagerungsinhibitor eine Lösung von Natriumdiethylentriaminpentakis (methylenphosphonat) oder Copolymer mit endständigem Phosphonat ist.

6. Zusammensetzung nach Anspruch 1, worin der Ablagerungsinhibitor ein Oligomer mit Phosphonsäure-Endgruppe gemäß der Formel (I) umfasst:

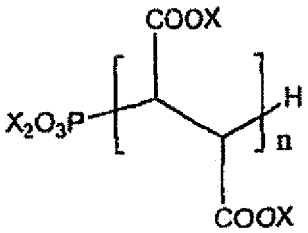

(I).

7. Zusammensetzung nach Anspruch 1, worin der Ablagerungsinhibitor ein Polymer mit Phosphonsäure-Endgruppe gemäß der Formal (II) umfasst:

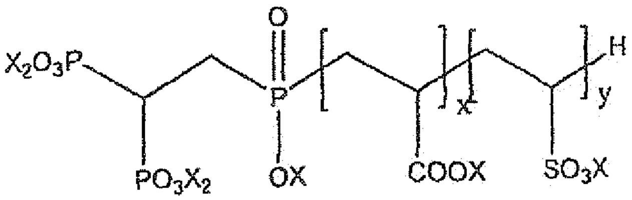

(II),

worin x H oder ein Anion ist und x + y eine ganze Zahl von größer als oder gleich 2 und kleiner als oder gleich 500 ist.

8. Zusammensetzung nach Anspruch 1, worin der Ablagerungsinhibitor ein Polymer mit Phosphonsäure-Endgruppe gemäß der Formel (III) umfasst:

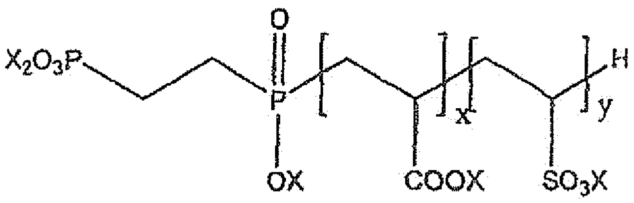

(III),

worin x H oder ein Anion ist und x + y eine ganze Zahl von größer als oder gleich 2 und kleiner als oder gleich 500 ist.

9. Zusammensetzung nach Anspruch 1, worin die Zusammensetzung eine Viskosität von größer als 0,01 bis 0,1 Pa·s (10 bis 100 Centipoise) bei einer Scherrate von weniger als oder gleich 100 reziproken Sekunden aufweist.

## Revendications

1. Composition de traitement sous pression du tartre pour traiter des puits d'hydrocarbures, comprenant un milieu aqueux, un inhibiteur de tartre, et une gomme de guar choisie parmi la gomme de guar hydroxypropyltriméthylammonium, la gomme de guar hydroxypropyllauryldiméthylammonium, la gomme de guar hydroxypropylstéaryldiméthylammonium, et leurs mélanges.

2. Composition selon la revendication 1, dans laquelle la solution est une solution à 0,1-50 % en poids de guar.

3. Composition selon la revendication 1, dans laquelle la solution est une solution à 1-50 % en poids d'inhibiteur de tartre.

**4.** Composition selon la revendication 1, dans laquelle l'inhibiteur de tartre est un copolymère phosphoné à fonction sulfonate ou une source soluble d'acide diéthylènetriaminepentakis (méthylènephosphonique).

**5.** Composition selon la revendication 1, dans laquelle l'inhibiteur de tartre est une solution de copolymère à coiffe terminale diéthylènetriaminepentakis (méthylènephosphonate) de sodium ou phosphonate.

**6.** Composition selon la revendication 1, dans laquelle l'inhibiteur de tartre comprend un oligomère à terminaison acide phosphonique répondant à la formule (I) :

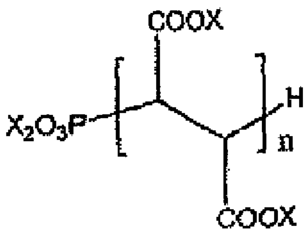

(I),

**7.** Composition selon la revendication 1, dans laquelle l'inhibiteur de tartre comprend un polymère à terminaison acide phosphonique répondant à la formule (II) :

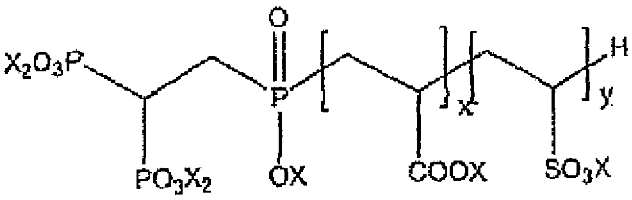

(II),

dans laquelle x est H ou un anion et x+y est un nombre entier supérieur ou égal à 2 et inférieur ou égal à 500.

**8.** Composition selon la revendication 1, dans laquelle l'inhibiteur de tartre comprend un polymère à terminaison acide phosphonique répondant à la formule (III) :

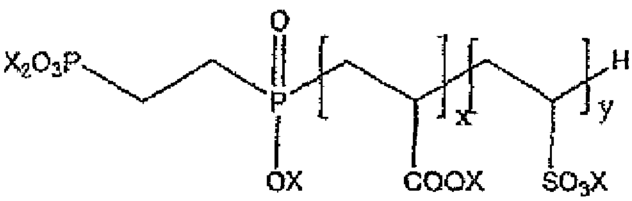

(III),

dans laquelle x est H ou un anion et x+y est un nombre entier supérieur ou égal à 2 et inférieur ou égal à 500.

**9.** Composition selon la revendication 1, dans laquelle la composition a une viscosité supérieure à 0,01 et inférieure ou égale à 0,1 Pa.s (10-100 centipoises) à une vitesse de cisaillement inférieure ou égale à 100 $s^{-1}$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5226481 A
- US 4738897 A
- US 4670166 A
- US 5224543 A
- US 6387853 B
- WO 0181476 A